Europäisches Patentamt

European Patent Office

Office européen des brevets

(19)

(11) Publication number: **0 301 103**
A1

## (12) EUROPEAN PATENT APPLICATION

published in accordance with Art. 158(3) EPC

(21) Application number: 88901468.4

(22) Date of filing: 09.02.88

Data of the international appli-
cation taken as a basis:
(86) International application number:
**PCT/JP 88/00120**
(87) International publication number:
**WO 88/05799 (11.08.88 88/18)**

(51) Int. Cl.⁴: **C 08 L 23/10**, C 08 L 23/16,
C 08 L 53/00, B 32 B 27/32

(30) Priority: 09.02.87 JP 26398/87

(43) Date of publication of application: 01.02.89
Bulletin 89/5

(84) Designated Contracting States: **AT BE CH DE FR GB IT LI
LU NL SE**

(71) Applicant: **MITSUI PETROCHEMICAL INDUSTRIES,
LTD., 2-5, Kasumigaseki 3-chome Chiyoda-ku,
Tokyo 100 (JP)**

(72) Inventor: **KOBAYASHI, Toshio, 2,
Yushudaihigashi 3-chome Ichihara-shi,
Chiba-ken 299-01 (JP)**
Inventor: **KANEKO, Katsutoshi, 4-1,
Yushudainishi 2-chome Ichihara-shi,
Chiba-ken 299-01 (JP)**
Inventor: **NAKAYAMA, Yoshio, 1550, Mobara
Mobara-shi, Chiba-ken 297 (JP)**

(74) Representative: **Cresswell, Thomas Anthony et al, J.A.
Kemp & Co. 14 South Square Gray's Inn, London
WC1R 5EU (GB)**

(54) **SHEET-LIKE MOLDING MATERIAL AND LAMINATE FOR MOLDING CONTAINING THE MATERIAL AS ONE LAYER.**

(57) A sheet-like molding material which comprises a composi-
tion of an at least partly crosslinked propylene polymer and a
filler. This material has a large strength at high temperatures
and can depress the tendency of reduction in the thickness of a
portion where a concentrated stress is generated in the pro-
duction of moldings of desired shapes, thus giving moldings
having a substantially uniform thickness as a whole.

EP 0 301 103 A1

SPECIFICATION

SHEET-LIKE MOLDING MATERIAL AND LAMINATE FOR
MOLDING CONTAINING THE MATERIAL AS ONE LAYER

Technological Field

The present invention relates to a sheet-like molding material composed of a propylene polymer which is at least partially crosslinked, and a sheet-like laminate using the above molding material as a core layer.

Prior Art

A sheet prepared from a composition comprising polypropylene and a filler incorporated therein or a laminate comprising this sheet as a core has been used as a plastic material for the production of a large-size molded article such as an automobile door, an instrument panel, a molded ceiling or a trunk room material. However, since the strength of this plastic material is reduced at a high temperature adopted at the molding step, when a molded article as mentioned above is formed from this plastic material by heat molding such as vacuum molding or air-pressure molding, the material is especially drawn at a portion where concentration of the stress is caused according to the shape of the molded article, for example, at a corner portion, with the result that the thickness is reduced at this portion and a molded article which is uneven in the thickness is often obtained. Accordingly, a plastic material in which the thickness is appropriately increased in advance so that a necessary thickness is given to the thickness-reduced portion has to be used. Therefore, the thickness of the non-thickness-reduced portion is unnecessarily increased. Since the thickness-reduced portion is only a very small part of the molded article, the amount of the wastefully consumed material is increased.

Accordingly, development of a plastic material, in which thickness unevenness is not caused at the heat molding step, as the material for the production of a large-size molded article is eagerly desired.

Summary of the Invention

It is a primary object of the present invention to provide a sheet-like plastic material for heat molding, in which reduction of the thickness only at the stress-concentrated portion is not caused in preparing a large-size molded article from the sheet-like material by heat molding such as vacuum molding or air-pressure molding, and which makes it possible to prepare a molded article in which the thickness is substantially uniform.

In accordance with one aspect of the present invention, there is provided a sheet-like molding material which comprises a composition comprising a propylene polymer which is at least partially crosslinked and a filler.

In accordance with another aspect of the present invention, there is provided a sheet-like molding laminate comprising a core layer composed of said sheet-like molding material.

Brief Description of the Drawing

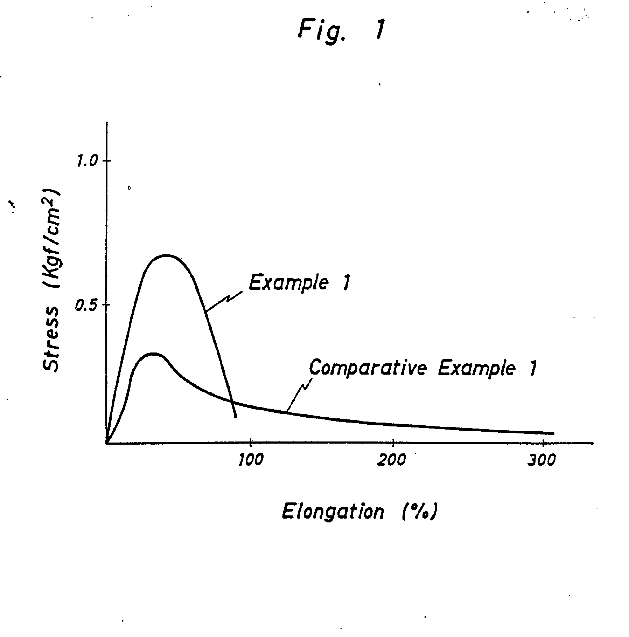

Fig. 1 is a stress-elongation curve illustrating tensile characteristics of the sheets obtained in Example 1 and Comparative Example given hereinafter.

Preferred Embodiments of the Invention Sheet-Like Molding Material

The sheet-like molding material of the present invention is composed of a composition comprising a propylene polymer which is at least partially crosslinked (hereinafter referred to as "crosslinked propylene polymer (A)") and a filler.

The crosslinked propylene polymer (A) is obtained by subjecting an uncrosslinked propylene homopolymer (a) to a crosslinking treatment. As the crosslinking treatment means, there can be mentioned a process in which the uncrosslinked propylene polymer (a) is melt-kneaded in the presence of a radical-forming agent and a crosslinking co-agent, and a process in which the uncrosslinked propylene (a) is irradiated with radioactive rays. The former process is preferable.

As the uncrosslinked propylene polymer ( ), there can be mentioned a crystalline propylene homopolymer, a crystalline random copolymer of propylene with other $\alpha$-olefin and a crystalline block copolymer of propylene with other $\alpha$-olefin.

As the $\alpha$-olefin, $\alpha$-olefins having 2 to 20 carbon atoms, such as ethylene, 1-butene, 1-pentene, 4-methyl-1-pentene, 1-hexene and 1-decene, are preferred and ethylene is especially preferred.

In the crystalline propylene random copolymer, the content of the $\alpha$-olefin is ordinarily lower than 10 mole% and preferably lower than 5 mole%.

The crystalline propylene block copolymer is generally prepared by conducting the polymerization operation so that the block copolymer comprises the following components (i) and (ii), (i) and (iii) or (i), (ii) and (iii).

(i) A crystalline propylene homopolymer component or a component of a crystalline propylene/$\alpha$-olefin random copolymer comprising a small amount of a copolymerized $\alpha$-olefin.

(ii) A rubbery propylene/$\alpha$-olefin copolymer component.

(iii) An $\alpha$-olefin homopolymer component or the $\alpha$-olefin random copolymer component composed mainly of an $\alpha$-olefin.

It is preferred that the content of the $\alpha$-olefin

other than propylene in the block copolymer be 10 to 30 mole%. A propylene/ethylene block copolymer having an ethylene content of 10 to 30 mole% is especially preferred as the block copolymer.

The melt flow rate (ASTM D-1238, condition L) of the propylene polymer (a) is preferably 0.1 to 10 g/10 min.

As pointed out hereinbefore, crosslinking of the uncrosslinked propylene polymer (a) is preferably performed by melt-kneading the uncrosslinked propylene polymer (a) in the presence of a radical-forming agent (c) and a crosslinking co-agent (d).

Organic peroxides, organic hydroperoxides and the like are preferably used as the radical-forming agent (c). For example, there can be mentioned dicumyl peroxide, benzoyl peroxide, lauroyl peroxide, t-butyl perbenzoate, di-t-butyl peroxide, cumene hydroperoxide, 2,5-dimethyl-2,5-di(t-butylperoxy)-hexane (Perhexa 2,5B), 2,5-dimethyl-2,5-di(t-butylperoxy)-3-hexyne (Perhexyne 2,5B), t-butyl hydroperoxide, isopropyl percarbonate and azobisisobutyronitrile The amount incorporated of the radical-forming agent (c) is ordinarily 0.01 to 0.5 part by weight, preferably 0.01 to 0.1 part by weight, per 100 parts by weight of the propylene polymer (a).

A polymerizable monomer having at least one ethylenically unsaturated bond is preferably used as the crosslinking co-agent (d). For example, there can be mentioned acrylic acid, methacrylic acid, maleic anhydride, vinylpyridine, aminomethyl acrylate, aminomethyl methacrylate, dimethylaminoethyl methacrylate, t-butylaminoethyl methacrylate. N-vinylpyrolidene, methacrylamide, vinyltris(ß-methoxyethoxy)silane, vinyltrimethoxysilane, vinyltrichlorosilane, butylene glycol dimethacrylate, butylene glycol diacrylate, ethylene glycol dimethacrylate, ethylene glycol diacrylate, diethylene glycol diacrylate, triethylene glycol diacrylate, polyethylene glycol dimethacrylate, polyethylene glycol diacrylate, trimethylol propane trimethacrylate, trimethylol propane triacrylate, neopentyl glycol diacrylate, hexane diol diacrylate, dicyclopentadiene, divinylbenzene, diallyl phthalate, tetraallyloxyethane, 1,10-decamethylene glycol dimethacrylate, allyl isocyanurate, triallyl isocyanurate and triallyl cyanurate.

Among these monomers, a monomer having at least two ethylenically unsaturated bonds is preferred, and divinylbenzene is especially preferred.

The amount incorporated of the crosslinking co-agent (d) is generally 0.5 to 5 parts by weight, preferably 0.5 to 2 parts by weight, per 100 parts by weight of the uncrosslinked propylene polymer (a).

The melt-kneading operation is carried out at a temperature higher than the melting temperature of the uncrosslinked propylene polymer (a). It is preferred that the melt-kneading operation be carried out at a temperature higher than the decomposition temperature of the radical-forming agent (c). It is generally recommended that the melt-kneading operation will be carried out at a temperature close to the temperature at which the half-value period of the radical-forming agent (c) is 1 minute, but a higher temperature can be adopted. The melt-kneading operation is generally carried out at 180 to 250°C, preferably 200 to 230°C.

The melt-kneading operation can be conducted batchwise by using a kneader such as a Banbury mixer or in a continuous manner by using an extruder, preferably a biaxial extruder. The kneading time is ordinarily about 1 to about 10 minutes. When kneading is carried out in an extruder, this kneading time is the residence time.

The so-obtained crosslinked propylene polymer (A) can be mixed with a filler, pelletized and molded into a sheet by a sheet forming machine. However, the filler can be made present at the above-mentioned melt-kneading operation, and this procedure is preferable.

The filler is added so as to improve the dimension stability or rigidity of the molded article. As the filler, there can be mentioned inorganic fillers such as talc, calcium carbonate and mica, and organic cellulose type fillers such as wood powder, paper and pulp. The filler is incorporated in an amount of 10 to 50 parts by weight, preferably 20 to 40 parts by weight, per 100 parts by weight of the uncrosslinked propylene polymer (a) or crosslinked propylene polymer (A).

In the present invention, other olefin polymer such as an ethylene/propylene rubber, an ethylene/propylene/diene rubber, polybutene-1 or polyethylene can be incorporated in an amount of up to 30 parts by weight per 100 parts by weight of the uncrosslinked propylene polymer (a) or crosslinked propylene polymer (A) before or after the kneading operation.

The degree of crosslinking in the crosslinked propylene polymer (A) can be known from the content of the boiling xylene-insoluble component. The content (% by weight) of the boiling xylene-insoluble component can be determined according to the following method. Precisely measured about 0.3 g of the crosslinked propylene polymer (Y g) is placed in a cage (Z g) formed of a 100-mesh stainless steel screen, and the cage is put in a Soxhlet extracter changed with about 200 mℓ of xylene and extraction is carried out under boiling for 3 hours. Then, the cage is taken out and dried at 100°C under a reduced pressure of 50 mmHg for 1 hour. The weight (X g) of the cage is measured and the content of the xylene-insoluble component is calculated according to the following formula:

xylene-insoluble component content (% by weight)

$$= \frac{X - Z}{Y} \times 100$$

wherein X stands for the weight of the cage after drying under reduced pressure, Y stands for the weight of the sample charged in the cage before extraction, and Z stands for the weight of the cage per se.

In the case where the filler is present in the sample, the amount of the filler should be subtracted from X and Y in the above-mentioned formula for correction.

It is preferred that the so-determined xylene-insoluble component content of the crosslinked propylene polymer (A) be at least 5% by weight, especially 10 to 60% by weight.

As means for forming the composition comprising the crosslinked propylene polymer (A) and the filler into a sheet, there can be mentioned a process in which a sheet is formed from the pelletized composition by using a sheet forming machine. However, there is preferably adopted a process in which a sheet dye is arranged at the outlet of the extruder used for the melt-kneading operation and a sheet is directly formed. In this process, of course, the filler is already made present at the melt-kneading step, and in this case, in order to attain uniform mixing of the propylene polymer and the filler, it is preferred that the uncrosslinked propylene polymer (a) be used in the powdery state.

The thickness of the sheet is appropriately selected according to the intended product formed by heat molding, but in general, the thickness of the sheet is 0.5 to 5 mm.

A known process customarily adopted for vacuum molding or air-pressure molding of a polypropylene resin can be directly adopted for heat molding of an intended article from the sheet. According to this process, interior automotive trims and exterior automotive trims can be prepared.

In the case where a large-size deep-draw-formed article is prepared, there can be adopted a process in which a sheet-shaped molding material is prepared at the first stage of molding and the sheet is subjected to vacuum molding or air-pressure molding under heating at the second stage whereby a molded article having a desired shape can be obtained.

The above-mentioned sheet-shaped molding material of the present invention is characterized in that the strength at a high temperature is high, and when a molded article having a desired shape is prepared by heat molding, reduction of the thickness at the stress-concentrated portion of the sheet, for Example, a corner of a small angle in the deep-draw-formed portion, is controlled, and a molded article having a substantially uniform thickness as a whole can be prepared.

Molding Laminate

According to the present inventin, there is provided a molding laminate comprising the above-mentioned sheet-shaped material as a core layer and a skin layer.

As the material of the skin layer, there can be used a thermoplastic elastomer, a fabric, a polyvinyl chloride (PVC) resin, a non-woven fabric and an artificial leather. Known materials can be used for the skin layer. For example, as the thermoplastic elastomer, there can be used a polyethylene/butyl rubber graft copolymer or products obtained by dynamically heat-treating in the presence of an organic peroxide a composition comprising as main component, an ethylene/propylene/non-conjugated diene rubber or a peroxide-crosslinkable olefinic copolymer rubber and a peroxide-non-crosslinkable hydrocarbon rubber.

Known additives such as a heat stabilizer, an antioxidant, a flame retardant and a colorant may be incorporated into the skin layer, so far as the properties of the laminate are not degraded.

A cushion layer composed of a thermoplastic resin foam can be interposed between the core layer and the skin layer.

As the thermoplastic resin foam, there can be used foams prepared from a polyolefin such as polyethylene or polypropylene or other thermoplastic resin such as polystyrene, a polyamide or an acrylonitrile/butadiene/ styrene copolymer resin according to a known process. It is preferred that the expansion ratio of the foam be 10 to 30.

In connection with the thickness of the laminate, it is preferred that the thickness of the core layer be 0.5 to 5 mm, the thickness of the skin layer be 0.1 to 1.5 mm, and the thickness of the cushion layer be 2 to 5 mm.

The laminate can be prepared according to a known process comprising laminating sheets of the respective layers and heat-fusion-bonding them with or without forming an adhesive layer between two adjacent layers. Moreover, the laminate can be prepared according to a known process comprising simultaneously extruding the skin layer and core layer by using a two-layer extrusion molding machine.

Since the sheet-like molding material and sheet-like molding laminate of the present invention have a high strength at a high temperature, molded articles having a substantially uniform thickness as a whole can be prepared from them. Accordingly, large-size molded articles having no unnecessarily thick portion can be easily prepared from the molding material and laminate of the present invention, and an effect of reducing the weight of a molded article can be attained.

The molding material and laminate of the present invention are suitable for the production of large-size molded articles, for example, interior automotive trims such as automobile doors, instrument panels, molded ceilings, dash boards and trunk rooms, and cores of these molded articles.

Example 1

By using a Henschel mixer, 70 parts by weight of a powery crystalline propylene/ethylene block copolymer (ethylene content = 20 mole%, ethylene/propylene copolymer rubber content = 12% by weight, melt flow rate $(230°C) = 0.5$ g/10 min, density = 0.91 g/cm$^3$, stress at yield point = 270 kgf/cm$^2$, tensile strength at break point = 250 kgf/cm$^2$, elongation at break point = 500%) containing 0.1% by weight of a heat-resistant stabilizer (Irganox 1010 supplied by Ciba-Geigy) was homogeneously mixed with 30 parts by weight of talc, 0.05 part by weight of 2,5-dimethyl-2,5-bis(tert-butylperoxy)hexane and 1.0 part by weight of divinylbenzene.

Then, the mixture was formed into a sheet having a thickness of 2.0 mm by using an extruder having a diameter of 110 mm and a die having a width of 1500 mm. The extrusion conditions were a screw rotation number of 40 rpm, an extrusion rate of 150 kg/hr and an extruder temperature of 220°C. The resistance time in the extruder was about 3 minutes. The xylene-insoluble component content of the sheet was 40% by weight. The tensile characteristics at 170°C of the sheet were as shown in Fig. 1.

The sheet having a size of 1300 mm x 800 mm was heated for 2 to 3 minutes by a far infrared ray heater to elevate the sheet temperature to about 170°C and the sheet was subjected to air-pressure molding using a mold for an automobile door, whereby an automobile door was prepared. At the molding step, drawdown of the heated and softened sheet was not caused at all. The minimum thickness of the door was as shown in Table 1. The thickness corresponded to the minimum thickness obtained in case of the starting sheet thickness of 3.0 mm in Comparative Example 1 given hereinafter.

Example 2

The sheet prepared in Example 1, a sheet of a thermoplastic elastomer (Milastomer supplied by Mitsui Petrochemical Industries, Ltd.) having a thickness of 0.8 mm and a sheet of a polypropylene foam (PPAM 1503 supplied by Toray Incorporated, expansion ratio = 15) having a thickness of 3.0 mm in the order of the thermoplastic elastomer, the polypropylene foam and the propylene polymer composition were heat-fusion-bonded by using nip rollers to obtain a propylene polymer molding laminate.

The laminate having a size of 1300 mm x 800 mm was heated for 2 to 3 minutes by using a far infrared ray heater to elevate the laminate temperature to about 170°C and the laminate was molded into an automobile door by air-pressure molding using a mold for an automobile door. The obtained automobile door had a good appearance and the thinnest part of a grip portion of the door had thickness and rigidity enough to resist the practical use.

Comparative Example

A composition obtained by mixing 70 parts by weight of the powdery polypropylene used in Example 1

- 12 - 00301103

homogeneously with 30 parts by weight of talc by a Henschel mixer was molded into sheets having a thickness of 2.0 or 3.0 mm under the same sheet molding conditions as adopted in Example 1. The xylene-insoluble component content in these sheets was 0% by weight, and the tensile characteristics at 170°C of the sheets were as shown in Fig.1.

Automobile doors were prepared by heat molding in the same manner as described in Example 1. The minimum thicknesses of these automobile doors were shown in Table 1.

## Table 1
### Heat-Molded Sheets

| | Example 1 | Comparative Example | |
|---|---|---|---|
| Starting sheet thickness (mm) | 2.0 | 2.0 | 3.0 |
| Xylene-insoluble component content (% by weight) | 40 | 0 | 0 |
| Minimum thickness (mm) | 0.8 | 0.4 | 0.8 |

## Example 3

A sheet was prepared in the same manner as described in Example 1 except that the amounts used of the powdery polypropylene, dicumyl peroxide as the radical-forming agent and divinylbenzene were adjusted to 80 parts by weight, 0.05 parts by weight and 0.7 part by weight, respectively.

When the sheet was heat-molded, drawdown of the sheet was not caused and a good moldability was attained, and the minimum thickness of the door was as good as 0.7 mm.

SCOPE OF CLAIM

1. A sheet-like molding material which comprises a composition comprising a propylene polymer (A) which is at least partially crosslinked and a filler.

2. A sheet-like molding material as set forth in claim 1, wherein the content of a xylene-insoluble component obtained when the propylene polymer (A) is extracted for 3 hours in boiling xylene is at least 5% by weight.

3. A sheet-like molding material as set forth in claim 1, wherein the content of the xylene-insoluble component in the propylene polymer (A) is 10 to 60% by weight.

4. A sheet-like molding material as set forth in claim 1, wherein the composition is a composition obtained by kneading 100 parts by weight of an uncrosslinked propylene polymer (a) with 10 to 50 parts by weight of a filler (b), 0.01 to 0.5 part by weight of a radical-forming agent (c) and 0.5 to 5 parts by weight of a crosslinking assistant (d) in the state where the uncrosslinked propylene polymer (a) is molten.

5. A sheet-like molding material as set forth in claim 4, wherein the crosslinking assistant (d) is a polymerizable monomer having at least one ethylenically unsaturated bond.

6. A sheet-like molding laminate comprising a core later and a skin layer, wherein the core layer comprises a composition comprising a propylene polymer (A) which is at least partially crosslinked and a filler.

7. A sheet-like molding laminate as set forth in claim 6, wherein the composition is a composition obtained by kneading 100 parts by weight of an uncrosslinked propylene polymer (a) with 10 to 50 parts by weight of a filler (b), 0.01 to 0.5 part by weight of a radical-forming agent (c) and 0.5 to 5 parts by weight of a crosslinking assistant(d) in the state where the uncrosslinked propylene polymer is molten.

8. A sheet-like molding laminate as set forth in claim6, wherein the skin layer is composed of a thermoplastic elastomer, a fabric, a polyvinyl chloride resin, a non-woven fabric or an artificial leather.

9. A sheet-like molding laminate as set forth in claim 6, wherein a cushion layer composed of a thermoplastic resin foam is interposed between the core layer and the skin layer.

10. A process for the preparation of a sheet-like molding material, which comprises kneading 100 parts by weight of an uncrosslinked propylene polymer (a) with 10 to 50 parts by weight of a filler (b), 0.01 to 0.5 part by weight of a radical-forming agent (c) and 0.5 to 5 parts by weight of a crosslinking assistant (d) in the state where the uncrosslinked propylene polymer (a) is molten, and molding the obtained composition into a sheet.

Fig. 1

# INTERNATIONAL SEARCH REPORT  00301103

International Application No  PCT/JP88/00120

## I. CLASSIFICATION OF SUBJECT MATTER (if several classification symbols apply, indicate all) [3]

According to International Patent Classification (IPC) or to both National Classification and IPC

$Int.Cl^4$    C08L23/10, 23/16, 53/00
B32B27/32

## II. FIELDS SEARCHED

### Minimum Documentation Searched [4]

| Classification System | Classification Symbols |
|---|---|
| IPC | C08L23/00, 23/10-23/16, 53/00 B32B27/32 |

### Documentation Searched other than Minimum Documentation to the Extent that such Documents are Included in the Fields Searched [6]

Jitsuyo Shinan Koho          1926 - 1987
Kokai Jitsuyo Shinan Koho    1971 - 1987

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| X | JP, A, 60-55014 (Showa Denko Kabushiki Kaisha) 29 March 1985 (29. 03. 85) Columns 1, 2, 7 to 10 (Family: none) | 1-10 |
| X | JP, A, 60-55012 (Showa Denko Kabushiki Kaisha) 29 March 1985 (29. 03. 85) Columns 1, 2, 7 to 10, 32 to 33 (Family: none) | 1-10 |
| X | JP, A, 60-49046 (Showa Denko Kabushiki Kaisha) 18 March 1985 (18. 03. 85) Columns 1, 2, 6 to 9, 27 to 28 (Family: none) | 1-10 |
| X | JP, A, 60-49045 (Showa Denko Kabushiki Kaisha) 18 March 1985 (18. 03. 85) Columns 1, 2, 6 to 9, 26 to 27 (Family: none) | 1-10 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [3] | Date of Mailing of this International Search Report [3] |
|---|---|
| February 18, 1988 (18.02.88) | February 29, 1988 (29.02.88) |

| International Searching Authority [1] | Signature of Authorized Officer [20] |
|---|---|
| Japanese Patent Office | |

Form PCT/ISA/210 (second sheet) (October 1977)

| | FURTHER INFORMATION CONTINUED FROM THE SECOND SHEET | |
|---|---|---|
| X | JP, A, 56-118433 (Nippon Petrochemicals Co., Ltd.) 17 September 1981 (17. 09. 81) Columns 1, 2 (Family: none) | 1-5 |
| X | JP, B1, 49-10982 (Toray Industries, Inc.) 14 March 1974 (14. 03. 74) Claim (Family: none) | 1-5 |
| X | JP, B1, 40-22865 (Esso Research and Engineering Company) 8 October 1965 (08. 10. 65) Column 4, lines 36 to 45, column 7, lines 12 to 34, claim (Family: none) | 1-7 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers.............. because they relate to subject matter [12] not required to be searched by this Authority, namely:

2.☐ Claim numbers.............. because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (October 1981)

| FURTHER INFORMATION CONTINUED FROM THE SECOND SHEET | | |
|---|---|---|
| X | JP, A, 60-47043 (Asahi Chemical Industry Co., Ltd.) 14 March 1985 (14. 03. 85) Columns 1, 2 (Family: none) | 1-5 |
| X | JP, A, 58-67447 (Tokuyama Soda Co., Ltd.) 22 April 1983 (22. 04. 83) Columns 1, 2 (Family: none) | 1-7 |
| X | JP, A, 56-118434 (Nippon Petrochemicals Co., Ltd.) 17 September 1981 (17. 09. 81) Columns 1, 2 (Family: none) | 1-5 |

V.☐ OBSERVATIONS WHERE CERTAIN CLAIMS WERE FOUND UNSEARCHABLE[10]

This international search report has not been established in respect of certain claims under Article 17(2) (a) for the following reasons:

1.☐ Claim numbers............ because they relate to subject matter [11] not required to be searched by this Authority, namely:

2.☐ Claim numbers............ because they relate to parts of the international application that do not comply with the prescribed requirements to such an extent that no meaningful international search can be carried out [12], specifically:

VI.☐ OBSERVATIONS WHERE UNITY OF INVENTION IS LACKING [13]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

| FURTHER INFORMATION CONTINUED FROM THE SECOND SHEET | | |
|---|---|---|
| Y | JP, A, 61-215044 (Sekisui Plastics Co., Ltd.) 24 September 1986 (24. 09. 86) Claim (Family: none) | 1-10 |
| Y | JP, U, 56-108524 (The Furukawa Electric Co., Ltd.) 22 August 1981 (22. 08. 81) Scope of Claim for Utility Model Registration (Family: none) | 1-10 |
| Y | JP, A, 56-8256 (Mitsubishi Petrochemical Co., Ltd.) 28 January 1981 (28. 01. 81) Claim (Family: none) | 1-10 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers_____ because they relate to subject matter [12] not required to be searched by this Authority, namely:

2.☐ Claim numbers_____ because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (October 1981)

00301103

International Application No. PCT/JP88/00120

**FURTHER INFORMATION CONTINUED FROM THE SECOND SHEET**

| Y | JP, U, 55-177422(Nippon Petrochemicals Co., Ltd.) 19 December 1980 (19. 12. 80) Scope of Claim for Utility Model Registration (Family: none) | 1-10 |
|---|---|---|

**V.☐ OBSERVATIONS WHERE CERTAIN CLAIMS WERE FOUND UNSEARCHABLE[10]**

This international search report has not been established in respect of certain claims under Article 17(2) (a) for the following reasons:

1.☐ Claim numbers_____ because they relate to subject matter[12] not required to be searched by this Authority, namely:

2.☐ Claim numbers_____ because they relate to parts of the international application that do not comply with the prescribed requirements to such an extent that no meaningful international search can be carried out[13], specifically:

**VI.☐ OBSERVATIONS WHERE UNITY OF INVENTION IS LACKING[11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (October 1981)